# FASCICULE DE BREVET EUROPEEN

(11) **EP 2 662 941 B1**
(45) Date de publication et mention de la délivrance du brevet: **10.06.2015**
(21) Numéro de dépôt: 13165033.5
(22) Date de dépôt: 24.04.2013
(51) Int. Cl.: H02B 1/20

(54) **Ensemble d'extrémité pour ensemble de distribution pour installation électrique**
Endeinheit für Verteilereinheit für elektrische Anlage
End assembly for a distribution unit of an electrical installation

(30) Priorité: 11.05.2012 FR 1254355
(43) Date de publication de la demande: 13.11.2013
(73) Titulaire: Legrand France, 87000 Limoges (FR); Legrand SNC, 87000 Limoges (FR)
(72) Inventeur: Comte, Frédéric, 06600 ANTIBES (FR)
(74) Mandataire: Santarelli

(56) Documents cités:
- EP-A1- 1 422 799
- EP-A1- 1 903 647

## Description

### DOMAINE DE L'INVENTION

L'invention a trait aux ensembles de distribution pour installation électrique.

### ARRIERE PLAN TECHNOLOGIQUE

On connaît déjà de tels ensembles qui comportent une pluralité d'appareils électriques au format modulaire.

On sait que de tels appareils sont globalement parallélépipédiques avec deux faces principales et des faces latérales s'étendant de l'une à l'autre des faces principales, la largeur d'un tel appareil, c'est-à-dire l'écart entre ses deux faces principales, étant égale à un nombre entier d'une largeur de base appelée «module » qui est de l'ordre de 18 mm.

On sait également que les appareils modulaires sont prévus pour appartenir à une rangée où ils sont disposés côte-à-côte en étant fixés par l'arrière sur un rail de support disposé horizontalement.

L'une des faces latérales, en général la face supérieure, présente au moins un orifice donnant accès à une borne configurée pour recevoir une dent d'un peigne de répartition horizontale prévu pour être disposé vis-à-vis dudit appareil suivant une direction gauche-droite.

Dans ces peignes, les dents sont disposées suivant un pas (entraxe entre deux dents successives) qui est égal à 1 module.

On va maintenant décrire à l'appui des figures 1 à 3 un ensemble de distribution pour installation électrique connu de la demande de brevet français 2 906 413. Sur les figures 1 à 3 :
- la figure 1 est une vue en perspective d'un disjoncteur modulaire bipolaire prévu pour faire partie d'un ensemble de distribution pour installation électrique ;
- la figure 2 est une vue en perspective d'un ensemble de distribution, pour installation électrique monophasée, formé par deux peignes de répartition conventionnels, par un rail de support à profil en Ω normalisé et par une rangée d'appareils électriques au format modulaire, sauf pour deux appareils qui présentent une largeur de 0,5 module, les appareils de cette rangée étant montrés en place sur le rail, les peignes étant montrés à l'écart de la rangée d'appareils ; et
- la figure 3 est une vue semblable à la figure 2, mais avec les peignes en place dans la rangée d'appareils.

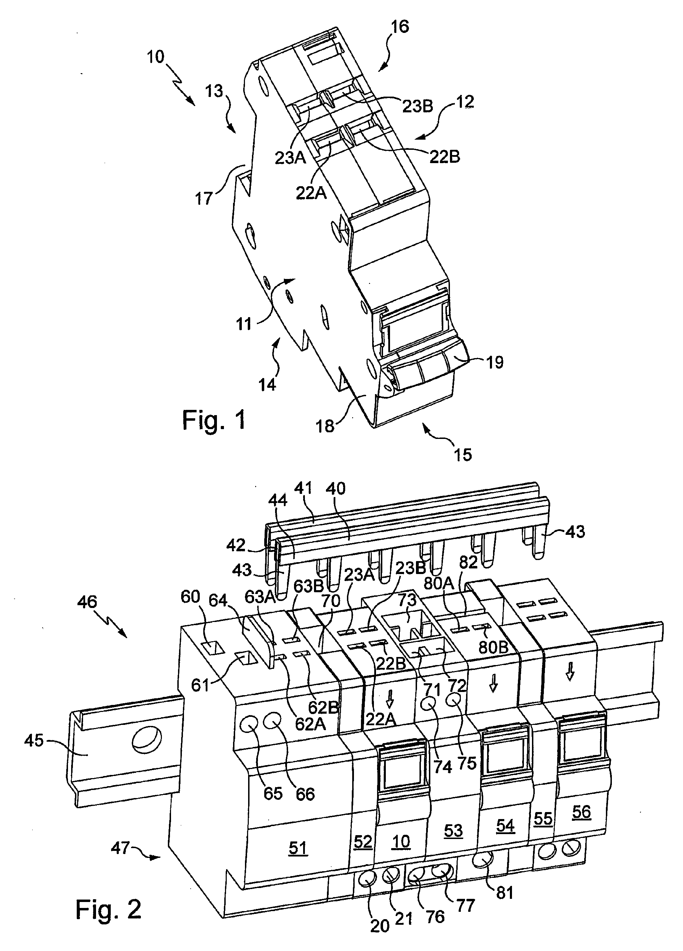

Le disjoncteur modulaire bipolaire 10 illustré sur la figure 1 a une forme globalement parallélépipédique.

Il présente deux faces principales 11 et 12 et des faces latérales s'étendant de l'une à l'autre des faces principales 11 et 12, à savoir une face arrière 13, une face inférieure 14, une face avant 15 et une face supérieure 16.

Conformément au format modulaire, l'écart entre ses deux faces principales 11 et 12 est égal à un nombre entier d'une largeur de base connue sous le nom de « module », qui est de l'ordre de 18 mm. Ici la largeur du disjoncteur 10 est de 1 module.

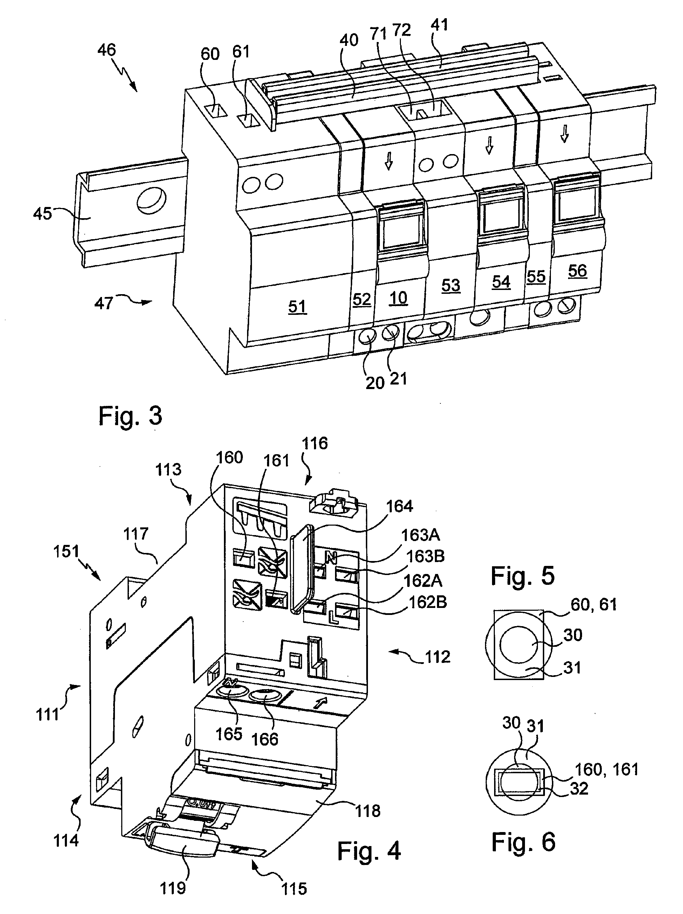

La face arrière 13 présente une échancrure 17 pour le montage du disjoncteur 1 sur un rail normalisé à profil en Q tel que le rail 45 illustré sur les figures 2 et 3.

La face inférieure 14 présente deux orifices d'accès à des bornes à vis non visibles sur les dessins.

La face avant 15 présente, en position centrale, sur à peu près la moitié de sa longueur, un nez 18 présentant un levier de manoeuvre 19. Sous le nez 18 se trouvent deux orifices 20 et 21 (figures 2 et 3) permettant chacun d'accéder à la tête de la vis de l'une des bornes pour lesquelles un orifice d'accès est ménagé dans la face inférieure 14.

La face supérieure 16 présente deux couples d'orifices 22A, 22B et 23A, 23B donnant chacun accès à une respective des deux doubles bornes à insertion que comporte le disjoncteur 10. Pour plus de détails sur l'agencement des doubles bornes à insertion, on pourra se reporter à la demande de brevet français 2 906 413 susmentionnée.

La double borne à insertion à laquelle donne accès le couple d'orifices 22A, 22B et la double borne à insertion à laquelle donne accès le couple d'orifices 23A, 23B constituent chacune une double borne d'entrée pour l'un des pôles d'une source de courant alternatif, ici un pôle de neutre et un pôle de phase.

Les bornes à vis auxquelles donnent accès les orifices situés dans la face inférieure 14 et dont la commande s'effectue par les orifices 20 et 21 de la face avant 15 sont quant à elles des bornes de sortie vers une portion d'une installation électrique protégée par le circuit interne du disjoncteur 10.

Ce circuit interne, lorsque le disjoncteur 10 est enclenché, raccorde la double borne à insertion à laquelle donnent accès les orifices 23A et 23B à la borne dont la vis peut être commandée par l'orifice 20 tandis qu'il raccorde la double borne à insertion à laquelle donnent accès les orifices 22A et 22B à la borne dont la vis peut être commandée par l'orifice 21.

L'alimentation du disjoncteur 10 est prévue pour être effectuée par deux peignes unipolaires de répartition horizontale conventionnels, portés respectivement au potentiel de phase et au potentiel de neutre, tels que les peignes 40 et 41 représentés sur les figures 2 et 3.

Comme on le voit plus particulièrement sur la figure 2, les peignes 40 et 41 sont ici identiques. La description donnée ci-après pour le peigne 40 vaut donc également pour le peigne 41.

Le peigne 40 comporte une longrine 42 en forme de bande continue à partir de laquelle saille une pluralité de dents 43, ici au nombre de 6.

La longrine 42 et les dents 43 sont faites d'une seule pièce dans une matière métallique bonne conductrice de l'électricité.

La longrine 42 et les dents 43 sont ici orientées suivant un même plan. Les dents 43 sont régulièrement réparties suivant un pas (entraxe entre deux dents consécutives) correspondant à la distance normalisée connue sous le nom « module », qui est de l'ordre de 18 mm.

Le peigne 40 comporte, en outre de la longrine 42 et des dents 43, une enveloppe 44 en matière isolante à profil en U qui recouvre la longrine 42 de sa tranche opposée aux dents 43 jusqu'à la racine des dents 43.

Entre deux dents 43, la tranche de la longrine 42 est rectiligne et située au même niveau que la tranche de l'enveloppe 44.

La double borne à insertion à laquelle donne accès le couple d'orifices 22A, 22B comporte deux pinces élastiques en forme de lyre ayant entre deux branches un intervalle en regard respectivement de l'orifice 22A et de l'orifice 22B. De même, la double borne à insertion à laquelle donne accès le couple d'orifices 23A, 23B comporte deux pinces élastiques en forme de lyre ayant entre deux branches un intervalle en regard respectivement de l'orifice 23A et de l'orifice 23B.

La double borne à insertion à laquelle donne accès le couple d'orifices 22A, 22B et la double borne à insertion à laquelle donne accès le couple d'orifices 23A, 23B sont chacune prévue pour recevoir une dent telle que 43 dans l'une ou l'autre, ou d'ailleurs dans chacune, de ses deux pinces élastiques, par simple insertion, avec bien entendu l'insertion qui se fait du côté de l'extrémité distale des branches des pinces et le peigne qui est orienté transversalement à la double borne, c'est-à-dire suivant une direction gauche-droite.

La conformation des doubles bornes à insertion et des dents 43 est telle qu'après insertion, la dent est fortement enserrée par la pince élastique, de sorte qu'il s'établit un bon contact électrique.

Les orifices 22A, 22B et 23A, 23B ménagés dans la face supérieure 16 du disjoncteur 10 permettent chacun à une dent telle que 43 d'accéder à la double borne à insertion située juste en-dessous.

Ainsi, les orifices 22A et 22B donnent chacun accès à l'une de deux bornes électriquement au même potentiel et disposées côte-à-côte. De même, les orifices 23A et 23B donnent chacun accès à l'une de deux bornes électriquement au même potentiel et disposées côte-à-côte.

L'orifice 22A et l'orifice 22B sont alignés suivant la direction gauche-droite et présentent l'un par rapport à l'autre un décalage suivant la direction gauche-droite, l'orifice 22A étant situé du côté gauche et l'orifice 22B du côté droit.

Le décalage entre les orifices 22A et 22B est de l'ordre de 0,5 module. L'écart entre l'orifice 22A et la face principale 11 (face principale située du côté de cet orifice) est de l'ordre de 0,25 module. De même, l'écart entre l'orifice 22B et la face principale 12 est de l'ordre de 0,25 module.

Ainsi, si l'on disposait côte-à-côte un ensemble de disjoncteurs tels que 10, les orifices tels que 22A et 22B seraient alignés avec le décalage entre deux orifices successifs qui serait toujours de l'ordre de 0,5 module, que ces orifices appartiennent à un même disjoncteur ou à deux disjoncteurs voisins.

La description qui précède pour les orifices 22A et 22B vaut également pour les orifices 23A et 23B, ces derniers présentant un simple décalage vers l'arrière (sans décalage suivant la direction gauche-droite) par rapport respectivement à l'orifice 22A et à l'orifice 22B.

Lorsque plusieurs disjoncteurs tels que 10 sont disposés côte-à-côte sur un même rail, par exemple le rail 45 montré sur les figures 2 et 3, les dents d'un même peigne, par exemple le peigne 40, peuvent être introduites dans les orifices tels que 22A des différents disjoncteurs et les dents d'un autre peigne, par exemple le peigne 41, peuvent être introduites dans les orifices tels que 23A des différents disjoncteurs, le peigne 40 étant en avant du peigne 41.

Il est également possible d'introduire les dents d'un peigne tel que 40 dans les orifices tels que 22B et les dents d'un peigne tel que 41 dans les orifices tels que 23B, ou d'introduire les dents d'un peigne tel que 40 dans les orifices tels que 22A et les dents d'un peigne tel que 41 dans les orifices tels que 23B, ou encore d'introduire les dents d'un peigne tel 40 dans les orifices tels que 22B et les dents d'un peigne tel que 41 dans les orifices tels que 23A.

Ce qui précède vaut également si les appareils disposés côte-à-côte ne sont pas des disjoncteurs 10, mais d'autres appareils modulaires présentant une face supérieure similaire à la face 16, et en tout cas avec des orifices d'accès disposés de la même manière.

Dans l'ensemble 46 illustré sur les figures 2 et 3, la rangée 47 d'appareils montés sur le rail 45 comporte, à partir de l'extrémité que l'on voit à gauche, un interrupteur différentiel bipolaire 51, un auxiliaire de signalisation 52, le disjoncteur bipolaire 10, auquel est associé l'auxiliaire 52, un télérupteur 53, un disjoncteur unipolaire 54, un autre auxiliaire de signalisation 55 et un autre disjoncteur bipolaire 56, auquel est associé l'auxiliaire de signalisation 55.

Tout comme le disjoncteur 10, l'interrupteur différentiel 51 est au format modulaire, mais alors que le disjoncteur 10 présente une largeur (écart entre les faces principales 11 et 12) égale à 1 module (environ 18 mm), l'interrupteur différentiel 51 présente une largeur de 2 modules (environ 36 mm).

L'interrupteur différentiel 51 présente, sur sa face supérieure, deux orifices 60 et 61 donnant chacun accès à une borne à vis d'entrée pour un câble électrique d'arrivée de courant et deux couples d'orifices 62A, 62B et 63A, 63B donnant chacun accès à une double borne à insertion telle que les doubles bornes du disjoncteur 10, pour le départ du courant, ces deux doubles bornes à insertion étant prévues pour recevoir respectivement une dent d'extrémité d'un peigne tel que 40 et une dent d'extrémité d'un peigne tel que 41.

Les couples d'orifices 62A, 62B et 63A, 63B ont des caractéristiques de positionnement semblables à celles des couples d'orifices 22A, 22B et 23A, 23B, que ce soit pour le positionnement de ces orifices les uns vis-à-vis des autres que pour le positionnement de ces orifices par rapport à la face principale de droite de l'interrupteur différentiel 51.

Entre, d'une part, les orifices 60 et 61 et, d'autre part, les couples d'orifices 62A, 62B et 63A, 63B, il saille de la face supérieure de l'interrupteur différentiel 51 une cloison 64 pour isoler les câbles d'arrivée de courant et les peignes tels que 40 et 41.

Pour la commande des vis des bornes auxquelles donnent accès respectivement l'orifice 60 et l'orifice 61, il est prévu dans la face avant de l'interrupteur différentiel 51 des orifices respectifs 65 et 66.

Ici, les bornes auxquelles donnent accès l'orifice 60 et le couple d'orifices 63A, 63B sont prévues pour le pôle de neutre tandis que les bornes auxquelles donnent accès l'orifice 61 et le couple d'orifices 62A, 62B sont prévues pour le pôle de phase.

Ainsi, le peigne 41 que l'on voit en arrière sur les figures 2 et 3 est porté au pôle de neutre par l'interrupteur 51 et répartit ce pôle entre les appareils de la rangée 47. Le peigne 40 que l'on voit à l'avant est porté au pôle de phase par l'interrupteur 51 et répartit ce pôle entre les appareils de la rangée 47.

L'auxiliaire de signalisation 52 associé au disjoncteur 10 présente une largeur de 0,5 module (environ 9 mm).

Pour permettre la mise en place des peignes 40 et 41, l'auxiliaire 52 présente dans sa face supérieure un creux 70 conformé en créneau.

Le télérupteur 53 présente une largeur de 1 module (environ 18 mm). Il présente dans sa face supérieure deux ouvertures 71 et 72 donnant chacune accès à une borne à vis pour le raccordement d'un câble, les ouvertures 71 et 72 étant disposées à l'extrême avant de la face supérieure du télérupteur 53. En arrière des ouvertures 71 et 72, la partie supérieure du télérupteur 53 présente un creux 73 dans lequel s'étendent de petites nervures d'isolation.

Pour la commande des vis des bornes auxquelles donnent accès les ouvertures 71 et 72, la face avant du télérupteur 53 comporte au-dessus de son nez deux orifices 74 et 75 permettant de commander respectivement la vis de la borne à laquelle donne accès l'ouverture 71 et la vis de la borne à laquelle donne accès l'ouverture 72.

La partie inférieure du télérupteur 53 comporte deux bornes à vis pour un câble auxquelles donnent accès des ouvertures non visibles pratiquées dans la face inférieure, la face avant présentant sous le nez du télérupteur 53 deux orifices 76 et 77 donnant accès chacun à la vis de l'une et de l'autre de ces bornes.

Le disjoncteur 54 est semblable au disjoncteur 10, si ce n'est qu'il est unipolaire (il est prévu pour un seul pôle de phase).

En conséquence, le disjoncteur 54 présente dans sa face supérieure un seul couple d'orifices 80A, 80B donnant accès à une double borne à insertion d'arrivée tandis que sa face inférieure présente une seule ouverture donnant accès à une borne à vis de départ, cette vis pouvant être commandée par l'orifice 81 ménagé en bas de sa face avant.

En arrière des orifices 80A et 80B, la face supérieure du disjoncteur unipolaire 54 présente une ouverture 82 en forme de fente orientée suivant une direction gauche-droite et s'étendant de l'une à l'autre des faces principales du disjoncteur 54.

L'auxiliaire de signalisation 55 et le disjoncteur 56 sont identiques respectivement à l'auxiliaire 52 et au disjoncteur 10.

On observera que les orifices semblables au couple d'orifices 22A, 22B du disjoncteur 10 (orifices 62A, 62B de l'interrupteur 51 et orifices 80A, 80B du disjoncteur 54) sont alignés et, de même, que les orifices semblables au couple 23A, 23B (orifices 63A, 63B de l'interrupteur 51) sont alignés entre eux et avec l'ouverture 82, et qu'au surplus les creux 70 et 73 sont situés au même niveau que ces orifices, de sorte qu'ils peuvent loger des dents telles que 43 des peignes tels que 40 et 41.

Grâce à la présence des couples d'orifices tels que 22A, 22B et 23A, 23B, les auxiliaires de signalisation 52 et 55, qui introduisent un décalage de 0,5 module, ne gênent pas la mise en place des peignes tels que 40 et 41 dont les dents ont un pas égal à 1 module.

En effet, la dent 43 du peigne 40 située le plus à gauche peut s'introduire dans l'orifice 62A (orifice de gauche) de l'interrupteur 51, la dent suivante peut se loger dans le creux 70, la dent suivante peut s'introduire dans l'orifice 22B (orifice de droite) du disjoncteur 10, la dent suivante peut se loger à droite et à l'avant du creux 73, la dent suivante peut s'introduire dans l'orifice 80B du disjoncteur 54, et la dent suivante (dent le plus à droite) peut s'introduire dans l'orifice tel que 22A (orifice de gauche) du disjoncteur 56, vu le nouveau décalage de 0,5 module créé par l'auxiliaire 55.

De même, les dents du peigne 41 s'introduisent respectivement dans l'orifice 63A, dans le creux 70, dans l'orifice 23B, à droite et en arrière du creux 73, dans l'ouverture 82 et dans l'orifice tel que 23A du disjoncteur 56.

On voit ainsi que la présence des auxiliaires de signalisation 52 et 55 n'introduit aucune difficulté à la mise en place des peignes conventionnels tels que 40 et 41.

### OBJET DE L'INVENTION

L'invention vise à permettre d'utiliser, dans un ensemble de distribution tel que 47, un appareil d'extrémité tel que l'interrupteur différentiel 51, d'une largeur de 2 modules mais dont le circuit interne est configuré pour accepter, entre les bornes d'arrivée et les bornes de départ, un courant plus élevé que l'interrupteur différentiel 51.

L'invention propose à cet effet un ensemble d'extrémité pour ensemble de distribution pour installation électrique,
lequel ensemble de distribution comporte :
- au moins un peigne de répartition horizontale comportant au moins une rangée de dents disposées suivant un pas égal à une distance prédéterminée, dite module ; et
- une pluralité d'appareils électriques au format modulaire, à savoir à forme globalement parallélépipédique avec deux faces principales et des faces latérales s'étendant de l'une à l'autre des faces principales, avec une largeur, c'est-à-dire l'écart entre les deux faces principales, égale à un nombre entier de dit(s) module(s), et avec l'une desdites faces latérales, supérieure ou inférieure, dénommée ci-après face latérale de raccordement, qui présente un orifice donnant accès à une borne configurée pour recevoir une dent dudit peigne alors disposé suivant une direction gauche-droite ;
   lequel ensemble d'extrémité comporte un dit appareil électrique au format modulaire, dénommé ci-après appareil électrique d'extrémité, comportant, dans ladite face latérale de raccordement :
- deux orifices de départ donnant chacun accès un borne de départ de courant à raccorder à une dent d'un dit peigne, chaque dite borne respective de départ de courant étant prévue pour un pôle électrique respectif ; et
- deux orifices d'arrivée donnant chacun accès à une borne d'arrivée de courant à raccorder à un câble électrique d'arrivée de courant respectif, chaque dite borne d'arrivée de courant étant prévue pour un pôle électrique respectif, chaque borne d'arrivée étant une borne à vis, avec pour chaque borne à vis un orifice d'accès à la vis dans la face avant de l'appareil d'extrémité, de sorte que lesdits deux orifices d'arrivée sont décalés l'un par rapport à l'autre suivant la direction gauche-droite, lesdits deux orifices d'arrivée de courant étant les seuls orifices de la face de raccordement donnant accès à une borne d'arrivée de courant ;
   lequel appareil d'extrémité a une largeur de 2 modules, avec lesdits deux orifices d'arrivée qui sont disposés dans une portion dudit appareil électrique d'extrémité ayant à partir d'une première dite face principale une largeur d'1 module ;
   caractérisé en ce que :
- ledit appareil d'extrémité est configuré pour accepter, entre les bornes d'arrivée et les bornes de départ, un courant prédéterminé nécessitant, conformément à la norme CEI 61008, un câble électrique à âme conductrice ayant une section allant jusqu'à 25 mm², laquelle âme conductrice doit être reçue, conformément à la norme CEI 60947, dans une borne à vis acceptant une dite âme conductrice de diamètre allant jusqu'à 6,9 mm ;
- en outre dudit appareil d'extrémité, ledit ensemble d'extrémité comporte un ensemble de raccordement comportant deux dents chacune agencée comme une dent d'un dit peigne et deux bornes à vis chacune configurée pour recevoir une dite âme conductrice de diamètre allant jusqu'à 6,9 mm, chaque borne à vis de l'ensemble de raccordement étant électriquement reliée à une dent respective de l'ensemble de raccordement ; et
- chaque dit orifice d'arrivée de l'appareil d'extrémité est dimensionné pour autoriser l'introduction d'une dite dent de l'ensemble de raccordement et est dimensionné pour interdire l'introduction d'une dite âme conductrice ayant un diamètre de 6,9 mm.

Ainsi, dans l'ensemble d'extrémité selon l'invention, les câbles électriques d'arrivée de courant, dont l'âme conductrice a un diamètre allant jusqu'à 6,9 mm, ne sont pas reçus directement dans l'appareil électrique d'extrémité mais dans les bornes à vis d'un ensemble de raccordement muni de dents agencées comme une dent de peigne de répartition horizontale conventionnel ; et ce sont les dents de cet ensemble de raccordement qui sont reçues dans les bornes d'arrivée de courant de l'appareil électrique d'extrémité.

Il se trouve que si les bornes d'arrivée de courant de l'appareil électrique d'extrémité devaient recevoir chacune un câble dont l'âme conductrice a un diamètre allant jusqu'à 6,9 mm, l'augmentation de la largeur qui en aurait résulté pour les orifices d'arrivée aurait nécessité que les orifices d'arrivée soient disposés dans une portion de l'appareil électrique d'extrémité ayant à partir de la face principale correspondante non plus une largeur d'1 module, mais une largeur de 2 modules, de sorte que l'appareil électrique d'extrémité aurait eu une largeur de 3 modules.

En effet, les orifices d'arrivée sont forcément décalés l'un par rapport à l'autre suivant la direction gauche-droite, afin qu'il y ait à côté de chaque borne à vis d'arrivée de courant suffisamment de place pour laisser la vis de l'autre borne à vis rejoindre la face avant de l'appareil électrique d'extrémité. Ce décalage nécessaire suivant la direction gauche-droite ne permet pas de disposer les deux orifices d'arrivée dans une portion de l'appareil ayant seulement une largeur d'1 module à partir de la face principale la plus proche.

Il se trouve par ailleurs que les peignes conventionnels de répartition horizontale tels que le peigne 40 ont la capacité de véhiculer une intensité maximale relativement importante, par exemple 63 A, alors que leurs dents telles que 43 ont une section relativement petite en comparaison de la section de l'âme conductrice d'un câble électrique capable de véhiculer la même intensité de courant. C'est grâce à cela qu'il est possible de disposer les deux orifices d'arrivée dans une portion de l'appareil électrique d'extrémité ayant une largeur d'1 module à partir de la face principale la plus proche.

Le fait que chaque orifice d'arrivée de l'appareil électrique d'extrémité est dimensionné pour interdire l'introduction d'une âme conductrice ayant un diamètre de 6,9 mm permet d'attirer l'attention de l'utilisateur sur le fait que l'appareil d'extrémité selon l'invention n'est pas prévu pour être connecté à un câble électrique.

Cela est favorable à éviter que soit commise l'erreur de câblage consistant à employer un câble dont l'âme conductrice n'a pas un diamètre suffisant pour véhiculer l'intensité maximale pour laquelle est dimensionné l'appareil électrique d'extrémité.

Selon des caractéristiques préférées, chaque dit orifice d'arrivée de l'appareil d'extrémité est dimensionné pour autoriser l'introduction d'une seule dent agencée comme une dent d'un dit peigne.

En s'assurant qu'une seule dent agencée comme une dent 43 d'un peigne tel que 40 puisse pénétrer dans l'un ou l'autre des orifices d'arrivée, on favorise la détection de l'erreur de câblage consistant à utiliser un câble à âme conductrice de trop faible section.

En effet, s'il reste possible de faire pénétrer un câble de petit diamètre, correspondant à l'épaisseur d'une dent 43 d'un peigne tel que 40, ce petit diamètre alertera l'utilisateur sur l'erreur de câblage.

Selon d'autres caractéristiques préférées pour des raisons de sécurité, de simplicité, de commodité et/ou d'économie :
- chaque dit orifice d'arrivée de l'appareil d'extrémité présente une largeur comprise entre 4,5 mm et 7 mm ainsi qu'une profondeur comprise entre 2,5 mm et 3,5 mm ;
- lesdits orifices d'arrivée sont décalés l'un par rapport à l'autre suivant la direction avant-arrière ;
- lesdits orifices de départ comportent un premier couple d'orifices alignés suivant la direction gauche-droite et un deuxième couple d'orifices alignés suivant la direction gauche-droite avec le premier couple d'orifices et le deuxième couple d'orifices qui sont disposés l'un derrière l'autre avec un simple décalage vers l'arrière, sans décalage selon la direction gauche-droite ;
- ledit appareil d'extrémité est configuré pour accepter, entre les bornes d'arrivée et les bornes de départ, un courant prédéterminé maximal de 63 A;
- ledit appareil d'extrémité est un interrupteur différentiel ;
- ledit ensemble de raccordement comporte une enveloppe en matière électriquement isolante juxtaposant deux dites bornes à vis et deux dites dents chacune agencée comme une dent d'un dit peigne ;
- ledit ensemble de raccordement est un dispositif de répartition verticale comportant au moins deux sous-ensembles chacun formé par deux dites bornes à vis et deux dents juxtaposées par ladite enveloppe en matière isolante et des conducteurs électriques pour relier ces deux sous-ensembles, disposés dans ladite enveloppe en matière isolante ; et/ou
- ledit ensemble de raccordement comporte un appareil électrique au format modulaire comportant lesdites deux bornes à vis chacune configurée pour recevoir l'âme conductrice d'un respectif dit câble d'arrivée et deux peignes de répartition horizontale pour relier lesdites bornes d'arrivée dudit appareil électrique d'extrémité audit appareil électrique comportant les bornes à vis configurées pour recevoir l'âme conductrice d'un respectif dit câble d'arrivée.

### BREVE DESCRIPTION DES DESSINS

L'exposé de l'invention sera maintenant poursuivi par la description détaillée d'un exemple de réalisation, donnée ci-après à titre illustratif et non limitatif, en référence aux dessins annexés, sur lesquels :
- les figures 1 à 3, décrites ci-dessus, illustrent un ensemble connu de distribution pour installation électrique ;
- la figure 4 est une vue en perspective d'un interrupteur différentiel bipolaire semblable à l'interrupteur différentiel bipolaire 51 mais dont le circuit interne est configuré pour accepter, entre les bornes d'arrivée et les bornes de départ, un courant plus élevé que l'interrupteur différentiel 51, les orifices d'arrivée de l'interrupteur différentiel illustré sur la figure 4 étant dimensionnés de sorte que cet interrupteur différentiel puisse former l'appareil électrique d'extrémité d'un ensemble d'extrémité conforme à l'invention ;
- la figure 5 est une vue schématique montant le contour de l'orifice 60 ou de l'orifice 61 de l'interrupteur différentiel 51, montrant le contour de l'âme conductrice d'un câble électrique d'arrivée de courant ayant le diamètre maximum normalisé pour l'intensité qu'accepte l'interrupteur différentiel 51, et montrant le contour de l'âme conductrice d'un câble d'arrivée de courant ayant le diamètre maximum normalisé pour l'intensité qu'accepte l'interrupteur différentiel illustré sur la figure 4 ;
- la figure 6 est une vue schématique semblable à la figure 5, mais montrant le contour de l'un des orifices d'arrivée de l'interrupteur différentiel illustré sur la figure 4 plutôt que de l'interrupteur différentiel 51 et montrant également le contour d'une dent semblable aux dents d'un peigne tel que 40 ;

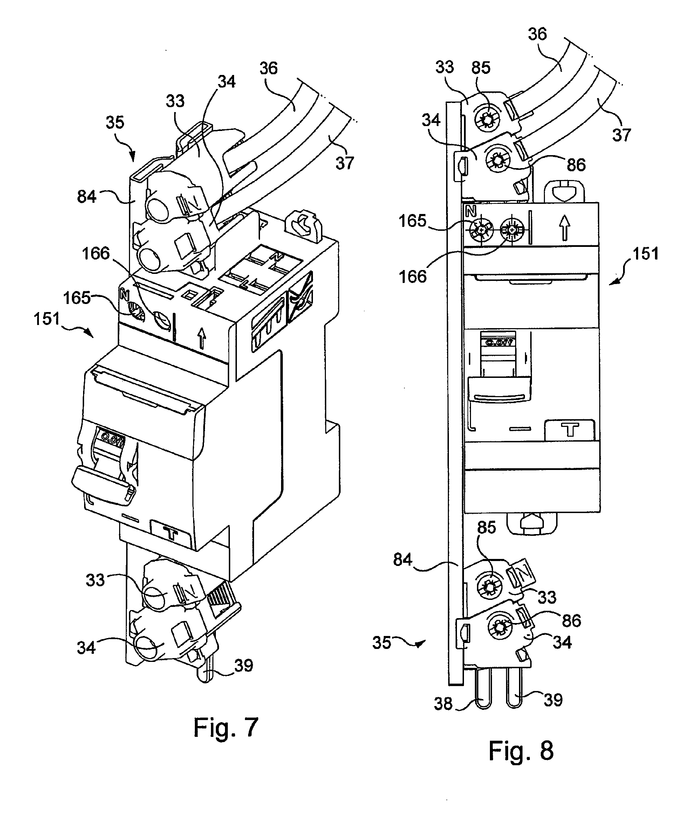

- la figure 7 est une vue en perspective d'un ensemble d'extrémité conforme à l'invention formé par l'interrupteur différentiel illustré sur la figure 4, par un dispositif de répartition verticale pour deux rangées d'appareils au format modulaire, et par deux câbles électriques d'arrivée de courant dont l'âme conductrice a le diamètre maximum normalisé pour l'intensité qu'accepte l'interrupteur différentiel illustré sur la figure 4 ;
- la figure 8 est une vue en élévation, prise de devant, de cet ensemble d'extrémité ;

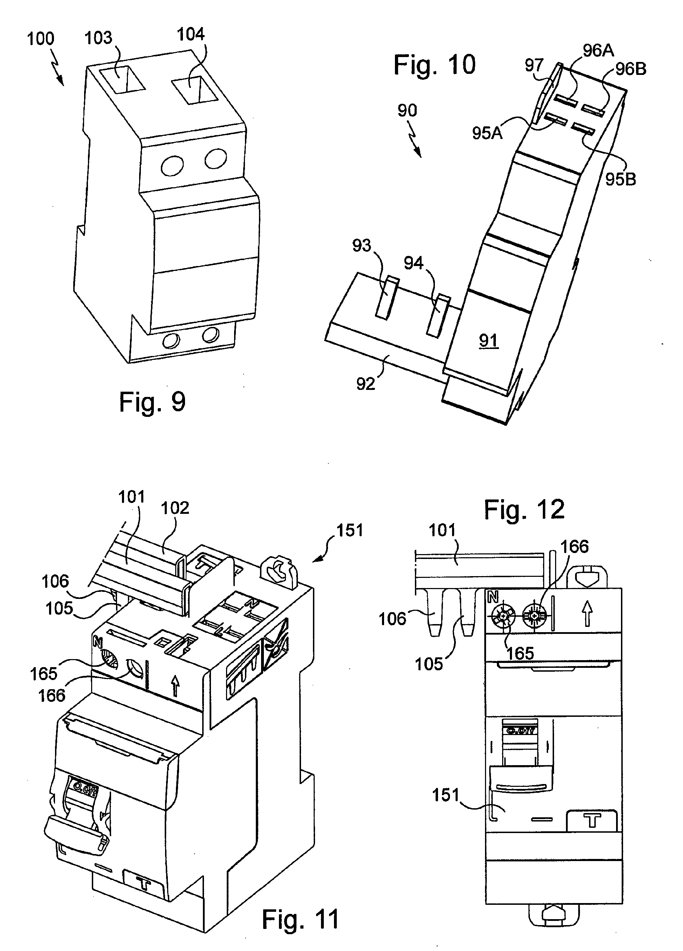

- la figure 9 est une vue très schématique en perspective d'un disjoncteur modulaire conventionnel dont le circuit interne est configuré pour accepter le même courant maximum que l'interrupteur différentiel 151 ;
- la figure 10 est une vue en perspective montrant un adaptateur de raccordement bipolaire à associer au disjoncteur illustré sur la figure 9 ; et
- les figures 11 et 12 sont des vues semblables aux figures 7 et 8, mais pour un ensemble comportant l'interrupteur différentiel illustré sur la figure 4 et deux peignes semblables au peigne 40 ayant chacun une dent d'extrémité reçue dans une respective des bornes d'arrivée de courant auxquelles donnent accès les orifices d'arrivée ménagés dans la face supérieure de cet interrupteur différentiel, les dents voisines de ces peignes étant reçues dans les bornes à insertion de l'adaptateur de raccordement illustré sur la figure 10 alors que cet adaptateur est associé au disjoncteur illustré sur la figure 9.

### DESCRIPTION DETAILLEE D'UN EXEMPLE DE REALISATION

L'interrupteur différentiel 151 illustré sur la figure 4 est semblable à l'interrupteur différentiel 51 illustré sur les figures 2 et 3 si ce n'est que son circuit interne est dimensionné, lorsqu'il est enclenché, pour pouvoir être traversé, entre les bornes d'arrivée et les bornes de départ, par un courant d'intensité maximale plus élevé que l'interrupteur différentiel 51.

Dans les exemples illustrés, l'interrupteur différentiel 51 admet un courant maximal de 40 A et l'interrupteur différentiel 151 admet un courant maximal de 63 A.

D'une façon générale, on a utilisé pour l'interrupteur différentiel 151 les mêmes références numériques que pour l'interrupteur différentiel 51 ou le disjoncteur 10 mais avec l'ajout de 100.

Ainsi, l'interrupteur différentiel 151 présente deux faces principales 111 et 112, une face arrière 113, une face inférieure 114, une face avant 115 et une face supérieure 116. La face arrière 113 présente une échancrure 117. La face avant 115 présente un nez 118 présentant un levier de manoeuvre 119.

La face supérieure 116 présente deux orifices d'arrivée 160 et 161 donnant chacun accès à une borne à vis d'entrée pour un câble électrique d'arrivée de courant ; et présente deux couples d'orifice 162A, 162B et 163A, 163B donnant chacun accès à une double borne à insertion, pour le départ du courant.

Entre, d'une part, les orifices 160 et 161 et, d'autre part, les couples d'orifices 162A, 162B et 163A, 163B, il saille de la face supérieure 116 de l'interrupteur différentiel 151 une cloison 164 pour isoler les câbles d'arrivée de courant et les peignes tels que 40 et 41.

Pour la commande des vis des bornes auxquelles donnent accès respectivement l'orifice 160 et l'orifice 161, il est prévu dans la face avant de l'interrupteur différentiel 151 des orifices respectifs 165 et 166.

Ici, les bornes auxquelles donnent accès l'orifice 160 et le couple d'orifice 163A, 163B sont prévues pour le pôle de neutre tandis que les bornes auxquelles donnent accès l'orifice 161 et le couple d'orifice 162A, 162B sont prévues pour le pôle de phase.

On observera que les orifices 160 et 161, de même que les orifices 60 et 61, sont décalés l'un par rapport à l'autre suivant la direction gauche-droite, afin qu'il y ait à côté de chaque borne à vis suffisamment de place pour laisser la vis de l'autre borne à vis rejoindre la face avant 115 de l'interrupteur différentiel 151.

Ici, en outre du décalage suivant la direction gauche-droite, les orifices 160 et 161, de même que les orifices 60 et 61, sont également décalés suivant la direction avant-arrière, avec l'orifice 161 qui est en avant de l'orifice 160.

Ce décalage permet d'utiliser l'interrupteur différentiel 161 avec des peignes conventionnels, par exemple comme expliqué ultérieurement à l'appui des figures 11 et 12.

De même que pour les orifices 60 et 61 de l'interrupteur différentiel 51, les orifices 160 et 161 de l'interrupteur différentiel 161 sont les seuls orifices de la face supérieure 116 donnant accès à une borne d'arrivée de courant.

On observera encore que, de même que l'interrupteur différentiel 51, l'interrupteur différentiel 151 a une largeur de 2 modules, avec les deux orifices d'arrivée 160 et 161 qui sont disposés dans une portion de l'interrupteur différentiel 151 ayant à partir de la face principale 111 une largeur d'1 module.

La figure 5 montre le contour de l'orifice d'arrivée 60 ou 61 de l'interrupteur différentiel 51, le contour de l'âme conductrice 30 d'un câble d'arrivée de courant ayant le diamètre maximum normalisé pour véhiculer l'intensité acceptable par l'interrupteur différentiel 51 ainsi que le contour de l'âme conductrice 31 d'un câble électrique d'arrivée ayant le diamètre maximum normalisé pour véhiculer l'intensité que peut traverser l'interrupteur différentiel 151.

On voit que l'âme conductrice 30 peut être introduite dans l'orifice 60 ou 61 alors que l'âme conductrice 31 ne peut pas être introduite dans l'orifice 60 ou 61.

Plus précisément, l'orifice 60 ou 61 est à contour globalement rectangulaire dont la largeur (dimension suivant la direction gauche-droite) est plus petite que la profondeur (dimension suivant la direction avant-arrière), avec la largeur qui est plus grande que le diamètre de l'âme conductrice 30 et plus petite que le diamètre de l'âme conductrice 31.

On notera que si l'âme conductrice 31 devait être accueillie dans l'interrupteur différentiel 51, l'augmentation de largeur qui en aurait résulté pour les orifices d'arrivée 60 et 61 aurait nécessité que les orifices d'arrivée 60 et 61 soient disposés dans une portion de l'interrupteur différentiel 51 ayant à partir de la face principale correspondante non plus une largeur d'1 module mais une largeur de 2 modules.

En effet, comme expliqué ci-dessus, les orifices 60 et 61 sont forcément décalés l'un par rapport à l'autre suivant la direction gauche-droite, afin qu'il y ait à côté de chaque borne à vis suffisamment de place pour laisser la vis de l'autre borne à vis rejoindre la face avant de l'appareil. Ainsi, les orifices deviendraient trop larges pour pouvoir être logés dans une portion de l'interrupteur différentiel ayant seulement une largeur de 1 module à partir de la face principale la plus proche.

A titre d'exemple, on notera que pour l'interrupteur différentiel 51 prévu pour une intensité maximale de 40 A, la norme CEI 61008 prévoit que les câbles électriques doivent avoir une âme conductrice dont la section est comprise entre 4 mm² et 16 mm² ; la norme CEI 60947 prévoit que la borne à vis prévue pour un câble dont l'âme conductrice a une section de 16 mm² doit accepter une âme conductrice dont le diamètre va jusqu'à 5,3 mm (en pratique, ce diamètre maximum normalisé correspond au diamètre d'un câble rigide multibrins dont les brins ne sont pas totalement jointifs) ; de sorte que les bornes à vis auxquelles donnent accès l'orifice 60 ou l'orifice 61 acceptent une âme conductrice de diamètre allant jusqu'à 5,3 mm.

Toujours à titre d'exemple, pour l'interrupteur différentiel 151 prévu pour une intensité maximale de 63 A, la norme CEI 61008 prévoit que les câbles électriques doivent avoir une âme conductrice dont la section est comprise entre 10 mm² et 25 mm² ; et la norme CEI 60947 prévoit que la borne à vis prévue pour un câble dont l'âme conductrice a une section de 25 mm² doit accepter une âme conductrice dont le diamètre va jusqu'à 6,9 mm (en pratique, ce diamètre maximum normalisé correspond au diamètre d'un câble rigide multibrins dont les brins ne sont pas totalement jointifs). ;

La figure 6 montre le contour de l'orifice d'arrivée 160 ou 161 de l'interrupteur différentiel 151, le contour de l'âme conductrice 30 (dont le diamètre est ici de 5,3 mm) et le contour de l'âme conductrice 31 (dont le diamètre est ici de 6,9 mm) ainsi que le contour d'une dent 32 agencée comme une dent 43 d'un peigne tel que 40.

On voit que ni l'âme conductrice 30 ni l'âme conductrice 31 ne peut être introduite dans l'orifice 160 ou dans l'orifice 161. Seule la dent 32 peut être introduite dans l'orifice 160 ou 161.

Plus précisément, l'orifice 160 ou 161 est à contour globalement rectangulaire dont la largeur (dimension suivant la direction gauche-droite) est plus grande que la profondeur (dimension suivant la direction avant-arrière), avec la largeur qui est plus grande que la largeur (dimension suivant la direction gauche-droite) de la dent 32 et plus petite que le diamètre de l'âme conductrice 31 et avec la profondeur qui est plus grande que l'épaisseur (dimension suivant la direction avant-arrière) de la dent 32, plus petite que le diamètre de l'âme conductrice 30 et plus petite que le diamètre de l'âme conductrice 31.

Comme indiqué ci-dessus, pour une intensité de 63 A, il faut un câble ayant un diamètre allant jusqu'à 6,9 mm.

A titre d'exemple, la largeur de l'orifice 160 ou 161 est de 5,3 mm et la profondeur de l'orifice 160 ou 161 est de 3 mm.

En pratique, la largeur de l'orifice 160 ou 161 est comprise entre 4,5 mm et 7 mm, et la largeur de l'orifice 160 ou 161 est comprise entre 2,5 mm et 3,5 mm.

Toujours à titre d'exemple, on notera que la dent 32 agencée comme une dent 43 d'un peigne tel que 40 prévu pour une intensité de 63 A présente une largeur de 4,2 mm et une épaisseur de 2 mm.

On observera que la largeur et la profondeur de l'orifice 160 ou de l'orifice 161 sont telles qu'il n'est possible d'y introduire qu'une seule dent 32 agencée comme une dent 43 d'un peigne tel que 40.

Si l'on compare l'épaisseur de la dent 32 agencée comme une dent 43 d'un peigne tel que 40 et le diamètre de l'âme conductrice 30, on voit qu'en s'assurant qu'une seule dent 32 agencée comme une dent 43 puisse pénétrer dans l'orifice 160 ou 161, on s'assure du même coup que l'âme conductrice telle 30 ne pourra pas pénétrer dans l'orifice 160 ou 161.

Ainsi, on réduit les risques d'effectuer avec l'interrupteur différentiel 151, l'erreur de câblage consistant à utiliser un câble à âme conductrice, tel que l'âme conductrice 30, de trop faible section. Le diamètre de l'âme conductrice pouvant pénétrer dans l'orifice 160 ou 161 étant faible (il faudrait que le diamètre de l'âme conductrice corresponde à l'épaisseur de la dent 32 agencée comme une dent 43 d'un peigne tel que 40), l'attention de l'opérateur sera normalement attirée et l'erreur de câblage détectée.

On observera que contrairement aux bornes de départ de courant auxquelles donnent accès les orifices 162A, 162B et 163A, 163B, les bornes auxquelles donnent accès les orifices 160 et 161 ne sont pas des bornes à insertion mais des bornes à vis.

Cela peut paraître surprenant puisque c'est une dent 32 agencée comme une dent 43 d'un peigne tel que 40 qui est prévue pour pénétrer dans l'orifice 160 ou dans l'orifice 161.

La raison du choix des bornes à vis est que les dents telles que 32 sont susceptibles d'être liées mécaniquement à une borne à vis pour accueillir l'âme conductrice telle que 31 d'un câble d'arrivée de courant, de sorte que les sollicitations mécaniques dans le sens de l'extraction sont les mêmes pour la dent telle que 32 que pour une borne accueillant directement l'âme conductrice d'un câble d'arrivée de courant.

La borne à vis à laquelle donne accès l'orifice 160 ou l'orifice 161 permet de supporter de telles sollicitations mécaniques d'extraction.

L'ensemble d'extrémité conforme à l'invention illustrée sur les figures 7 et 8 comporte l'interrupteur différentiel 151 et un dispositif de répartition verticale 35 connu par exemple de la demande de brevet français 2 847 732.

Le dispositif de répartition verticale 35 est ici prévu pour relier électriquement deux câbles électriques 36 et 37 aux bornes d'arrivée de courant de l'appareil d'extrémité tel que 51 ou 151 d'une première rangée d'appareils telle que 47 et aux bornes d'arrivée de courant de l'appareil d'extrémité d'une deuxième rangée d'appareils situés en dessous de la première rangée d'appareils.

Comme on le voit en bas sur les figures 7 et 8, le dispositif de répartition verticale 35 comporte pour l'appareil d'extrémité de la rangée inférieure (non illustrée) deux dents 38 et 39 chacune agencée comme une dent 43 d'un peigne tel que 40 et deux bornes à vis 33 et 34 pour l'âme conductrice telle que 31 d'un câble électrique tel que 36 ou 37.

De même, le dispositif de répartition verticale 35 comporte dans sa partie que l'on voit en haut sur les figures 7 et 8, deux autres dents 38 et 39 et deux autres bornes à vis 33 et 34.

Les deux dents 38 et les deux bornes à vis 33 sont reliées électriquement par un conducteur électrique rigide que comporte le dispositif 35. Les deux dents 39 et les deux bornes à vis 34 sont reliées l'une à l'autre par un autre conducteur électrique rigide que comporte le dispositif 35. Le premier conducteur électrique rigide et le deuxième conducteur électrique rigide sont disposés dans une enveloppe 84 en matière isolante qui entoure également partiellement les bornes à vis 33 et 34.

L'enveloppe 84 positionne les dents 38 et 39 de la même façon que les orifices 60 et 61 ou les orifices 160 et 161, c'est-à-dire avec à la fois un décalage suivant la direction gauche-droite et un décalage suivant la direction avant-arrière, avec la dent 38 qui est en arrière de la dent 39.

L'enveloppe 84 juxtapose également les bornes à vis 33 et 34. L'enveloppe 84 comporte à l'avant un orifice donnant accès à la vis 85 de la borne 33 et un orifice donnant accès à la vis 86 de la borne 34.

La dent 38 située en haut dans le dispositif 35 est en place dans la borne à vis à laquelle donne accès l'orifice 160, c'est-à-dire que la dent 38 a été engagée au travers de l'orifice 160 pour se mettre en place dans la borne à vis à laquelle donne accès cet orifice, puis un outil tel qu'un tournevis a été utilisé pour commander la vis de la borne à laquelle donne accès l'orifice 165 pour serrer la dent 38.

La borne à vis 33 reçoit l'âme conductrice telle que 31 du câble d'arrivée 36, c'est-à-dire que cette âme conductrice a été mise en place dans la borne 33 puis la vis 85 de la borne 33 a été commandée par un outil tel qu'un tournevis pour serrer l'âme conductrice du câble 36.

De même, la dent 39 du haut du dispositif de répartition verticale 35 est en place dans la borne à vis à laquelle donne accès l'orifice 161 ; et l'âme conductrice telle que 31 du câble d'arrivée 37 est en place dans la borne à vis 34 du haut du dispositif de répartition verticale 35.

Bien entendu, les dents 38 et 39 qu'on voit en bas sur les figures 7 et 8 sont engagées elles aussi dans les bornes à vis de l'appareil d'extrémité de la rangée située en-dessous de la rangée à laquelle appartient l'interrupteur différentiel 151.

Dans l'exemple illustré, les câbles 36 et 37 viennent de l'appareil de branchement au réseau électrique et les bornes 33 et 34 du bas du dispositif de répartition verticale 35 sont inutilisées ou servent à faire un repiquage vers un autre ensemble de distribution. Bien entendu, en variante, les câbles venant de l'appareil de branchement au réseau électrique sont connectés aux bornes à vis 33 et 34 du bas du dispositif 35 et les bornes du haut sont inutilisées ou servent à faire un repiquage.

On observera que le dispositif de répartition verticale 35 forme un ensemble de raccordement comportant deux dents 38 et 39 chacune agencée comme une dent 43 d'un peigne tel que 40 et deux bornes à vis 33 et 34 chacune configurée pour recevoir l'âme conductrice telle que 31 d'un respectif des câbles d'arrivée 36 et 37, avec chaque borne à vis 33 et 34 qui est électriquement reliée à une dent respective 38 et 39.

Dans des variantes non illustrées, le dispositif de répartition verticale est semblable au dispositif 35 mais avec davantage que deux rangées, par exemple trois ou quatre rangées ; ou alors l'ensemble de raccordement est prévu pour une seule rangée d'appareils en comportant uniquement un ensemble formé par une dent telle que 38, une dent telle que 39, une borne à vis telle que 33 et une borne à vis telle que 34, sans qu'il y ait des conducteurs rigides qui longent la face principale de l'appareil d'extrémité pour aller rejoindre une autre rangée.

Dans une autre variante non illustrée, on utilise deux accessoires de raccordement indépendants comportant chacun une dent telle que 38 ou 39 et une borne à vis telle que 33 ou 34.

Dans la variante illustrée sur les figures 9 à 12, il est également utilisé un ensemble de raccordement comportant deux dents chacune agencée comme une dent 43 d'un peigne tel que 40 et deux bornes à vis chacune configurée pour recevoir l'âme conductrice telle que 31 d'un câble d'arrivée respectif.

Cet ensemble comporte le disjoncteur 100 (figure 9) pour les bornes à vis configurées pour recevoir l'âme conductrice d'un câble électrique d'arrivée de courant, les peignes 101 et 102 (figures 11 et 12) pour les dents reçues dans les bornes d'arrivée de l'interrupteur différentiel 151 et l'adaptateur de raccordement 90 (figure 10) pour relier les peignes 101 et 102 aux bornes de départ de courant du disjoncteur 100.

Ce dernier est un disjoncteur conventionnel au format modulaire, d'une largeur de 2 modules, présentant dans sa face supérieure deux orifices 103 et 104 prévus pour l'introduction de câbles d'arrivée de courant et dans sa face inférieure deux orifices (non visibles) pour l'introduction des câbles de départ de courant. L'intensité maximale pour laquelle est configuré le disjoncteur 100 est la même que pour l'interrupteur différentiel 151 (ici, 63A).

Les orifices 103 et 104 donnent chacun accès à une borne à vis d'arrivée de courant. Les orifices ménagés dans la face inférieure de disjoncteur 100 donnent chacun accès à une borne à vis de départ de courant. Des orifices sont prévus sur la face avant du disjoncteur 100 pour donner accès aux vis des bornes d'arrivée de courant et des bornes de départ de courant.

Les peignes 101 et 102 sont semblables aux peignes 40 et 41 si ce n'est qu'ils n'ont que deux dents.

L'adaptateur 90 comporte un corps 91 au format modulaire, ayant une largeur de 1 module et une semelle 92 saillant du corps 91 au-delà de sa face principale de gauche en partie inférieure, la semelle 92 présentant des dents 93 et 94 saillant verticalement au-dessus de sa face supérieure, ces dents étant prévues pour être introduites dans les orifices ménagés dans la face inférieure d'un appareil tel que le disjoncteur 100, la semelle 92 ayant, comme le disjoncteur 100, une largeur de 2 modules tandis que l'écart entre les dents 93 et 94 est de 1 module.

La partie supérieure du corps 91 présente, tout comme l'interrupteur différentiel 51 ou 151, deux couples d'orifices 95A, 95B et 96A, 96B donnant accès à des doubles bornes à insertion.

Il saille de la face supérieure du corps 91, en bordure de la face principale de gauche, une cloison d'isolation 97.

Les couples d'orifices 95A, 95B et 96A, 96B ainsi que la cloison 97 jouent le même rôle que, respectivement, le couple d'orifices 62A, 62B ou 162A, 162B, le couple d'orifices 63A, 63B ou 163A, 163B et la cloison d'isolation 64 ou 164.

La dent 93, située à gauche, est reliée par des conducteurs internes de l'adaptateur 90 à la double borne à insertion auxquels donnent accès les orifices 96A, 96B (pôle de neutre) tandis que la dent 94, située à droite, est reliée par des conducteurs internes de l'adaptateur 90 à la double borne auxquels donnent accès les orifices 95A, 95B (pôle de phase).

Lorsque le disjoncteur 100, l'adaptateur de raccordement 90 et l'interrupteur différentiel 151 ainsi que les peignes 101 et 102 sont associés pour former un ensemble d'extrémité pour un ensemble de distribution tel que l'ensemble 47, le disjoncteur 100 est l'appareil le plus à gauche qui reçoit les câbles d'arrivée de courant ayant chacun une âme conductrice telle que 31 reçue dans la borne à vis à laquelle donnent accès respectivement l'orifice 103 et l'orifice 104, le corps 91 de l'adaptateur 90 est à droite du disjoncteur 100 avec les dents 93 et 94 reçues dans les bornes de départ auxquelles donnent accès les orifices situés dans la face inférieure du disjoncteur 100, la dent 105 du peigne 101 est engagée au travers de l'orifice 95B de l'adaptateur 90 et la dent 106 du peigne 102 est engagée dans l'orifice 96A de l'adaptateur 90, la dent du peigne 101 située à droite de la dent 105 est reçue dans la borne à vis à laquelle donnent accès l'orifice 161 et la dent du peigne 102 située à droite de la dent 106 est reçue dans la borne à vis à laquelle donne accès l'orifice 160.

Dans des variantes de l'ensemble d'extrémité illustré sur les figures 9 à 12, le disjoncteur 100 est remplacé par un autre appareil, par exemple un coupe-circuit à fusible ; et/ou l'association de l'appareil tel que 100 et de l'adaptateur de raccordement tel que 90 est remplacé par un appareil unique dont la face supérieure est agencée comme la face supérieure de l'association de l'appareil tel que 100 et de l'adaptateur 90.

Toujours dans des variantes non illustrées, l'interrupteur différentiel 151 est remplacé par un autre appareil d'extrémité dont la partie supérieure est agencée comme celle de l'interrupteur différentiel 151, par exemple un coupe-circuit à fusible.

Toujours en variante, l'appareil d'extrémité tel que l'interrupteur différentiel 151 est disposé à droite plutôt qu'à gauche ; la face de raccordement est la face inférieure plutôt que la face supérieure ; et/ou l'intensité maximale acceptée est différente de 63 A tout en étant compatible avec un diamètre d'âme conductrice maximum normalisé de 6,9 mm, par exemple 50 A ou 80 A.

De nombreuses autres variantes sont possibles en fonction des circonstances, et l'on rappelle à cet égard que l'invention ne se limite pas aux exemples décrits et représentés.

## Revendications

1. Ensemble d'extrémité pour ensemble de distribution (46) pour installation électrique,
lequel ensemble de distribution (46) comporte :
- au moins un peigne (40, 41) de répartition horizontale comportant au moins une rangée de dents (43) disposées suivant un pas égal à une distance prédéterminée, dite module ; et
- une pluralité d'appareils électriques (51-56) au format modulaire, à savoir à forme globalement parallélépipédique avec deux faces principales (11, 12) et des faces latérales (13-16) s'étendant de l'une à l'autre des faces principales (11, 12), avec une largeur, c'est-à-dire l'écart entre les deux faces principales (11, 12), égale à un nombre entier de dit(s) module(s), et avec l'une desdites faces latérales (16), supérieure ou inférieure, dénommée ci-après face latérale de raccordement, qui présente un orifice (22A, 22B, 23A, 23B, 62A, 62B, 63A, 63B, 80A, 80B) donnant accès à une borne configurée pour recevoir une dent (43) dudit peigne (40, 41) alors disposé suivant une direction gauche-droite ;
lequel ensemble d'extrémité comporte un dit appareil électrique au format modulaire (151), dénommé ci-après appareil électrique d'extrémité, comportant, dans ladite face latérale de raccordement (116) :
- deux orifices de départ (162A, 162B, 163A, 163B) donnant chacun accès un borne de départ de courant à raccorder à une dent (43) d'un dit peigne (40, 41), chaque dite borne respective de départ de courant étant prévue pour un pôle électrique respectif ; et
- deux orifices d'arrivée (160, 161) donnant chacun accès à une borne d'arrivée de courant à raccorder à un câble électrique d'arrivée de courant (36, 37) respectif, chaque dite borne d'arrivée de courant étant prévue pour un pôle électrique respectif, chaque borne d'arrivée étant une borne à vis, avec pour chaque borne à vis un orifice d'accès à la vis dans la face avant (115) de l'appareil d'extrémité (151), de sorte que lesdits deux orifices d'arrivée (160, 161) sont décalés l'un par rapport à l'autre suivant la direction gauche-droite, lesdits deux orifices d'arrivée de courant (160, 161) étant les seuls orifices de la face de raccordement donnant accès à une borne d'arrivée de courant ;
lequel appareil d'extrémité a une largeur de 2 modules, avec lesdits deux orifices d'arrivée (160, 161) qui sont disposés dans une portion dudit appareil électrique d'extrémité (151) ayant à partir d'une première dite face principale (111) une largeur d'1 module ;
**caractérisé en ce que** :
- ledit appareil d'extrémité (151) est configuré pour accepter, entre les bornes d'arrivée et les bornes de départ, un courant prédéterminé nécessitant, conformément à la norme CEI 61008, un câble (36, 37) électrique à âme conductrice (31) ayant une section allant jusqu'à 25 mm², laquelle âme conductrice (31) doit être reçue, conformément à la norme CEI 60947, dans une borne à vis acceptant une dite âme conductrice (31) de diamètre allant jusqu'à 6,9 mm;
- en outre dudit appareil d'extrémité (151), ledit ensemble d'extrémité comporte un ensemble de raccordement (35 ; 100, 90, 101, 102) comportant deux dents (38, 39) chacune agencée comme une dent (43) d'un dit peigne (40, 41) et deux bornes à vis (33, 34 ; 100) chacune configurée pour recevoir une dite âme conductrice (31) de diamètre allant jusqu'à 6,9 mm, chaque borne à vis (33, 34 ; 100) de l'ensemble de raccordement (35 ; 100, 90, 101, 102) étant électriquement reliée à une dent respective (38, 39) de l'ensemble de raccordement ; et
- chaque dit orifice d'arrivée (160, 161) de l'appareil d'extrémité (151) est dimensionné pour autoriser l'introduction d'une dite dent (38, 39) de l'ensemble de raccordement et est dimensionné pour interdire l'introduction d'une dite âme conductrice (31) ayant un diamètre de 6,9 mm.

2. Ensemble selon la revendication 1, **caractérisé en ce que** chaque dit orifice d'arrivée (160, 161) de l'appareil d'extrémité (151) est dimensionné pour autoriser l'introduction d'une seule dent agencée comme une dent (43) d'un dit peigne (40, 41).

3. Ensemble selon l'une quelconque des revendications 1 ou 2, **caractérisé en ce que** chaque dit orifice d'arrivée (160, 161) de l'appareil d'extrémité (151) présente une largeur comprise entre 4,5 mm et 7 mm ainsi qu'une profondeur comprise entre 2,5 mm et 3,5 mm.

4. Ensemble d'extrémité selon l'une quelconque des revendications 1 à 3, **caractérisé en ce que** lesdits orifices d'arrivée (160, 161) sont décalés l'un par rapport à l'autre suivant la direction avant-arrière.

5. Ensemble selon l'une quelconque des revendications 1 à 4, **caractérisé en ce que** lesdits orifices de départ comportent un premier couple d'orifices (162A, 162B) alignés suivant la direction gauche-droite et un deuxième couple d'orifices (163A, 163B) alignés suivant la direction gauche-droite avec le premier couple d'orifices (162A, 162B) et le deuxième couple d'orifices (163A, 163B) qui sont disposés l'un derrière l'autre avec un simple décalage vers l'arrière, sans décalage selon la direction gauche-droite.

6. Ensemble selon l'une quelconque des revendications 1 à 5, **caractérisé en ce que** ledit appareil d'extrémité est configuré pour accepter, entre les bornes d'arrivée et les bornes de départ, un courant prédéterminé maximal de 63 A.

7. Ensemble selon l'une quelconque des revendications 1 à 5, **caractérisé en ce que** ledit appareil d'extrémité est un interrupteur différentiel (151).

8. Ensemble selon l'une quelconque des revendications 1 à 7, **caractérisé en ce que** ledit ensemble de raccordement comporte une enveloppe (84) en matière électriquement isolante juxtaposant deux dites bornes à vis (33, 34) et deux dites dents (38, 39) chacune agencée comme une dent (43) d'un dit peigne (40, 41).

9. Ensemble selon la revendication 8, **caractérisé en ce que** ledit ensemble de raccordement est un dispositif de répartition verticale (35) comportant au moins deux sous-ensembles chacun formé par deux dites bornes à vis (33, 34) et deux dents (38, 39) juxtaposées par ladite enveloppe (84) en matière isolante et des conducteurs électriques pour relier ces deux sous-ensembles, disposés dans ladite enveloppe (84) en matière isolante.

10. Ensemble selon l'une quelconque des revendications 1 à 8, **caractérisé en ce que** ledit ensemble de raccordement comporte un appareil électrique au format modulaire (100) comportant lesdites deux bornes à vis chacune configurée pour recevoir l'âme conductrice d'un respectif dit câble d'arrivée (36, 37) et deux peignes de répartition horizontale (101, 102) pour relier lesdites bornes d'arrivée dudit appareil électrique d'extrémité (151) audit appareil électrique (100) comportant les bornes à vis configurées pour recevoir l'âme conductrice (31) d'un respectif dit câble d'arrivée (36, 37).

## Patentansprüche

1. Abschlusseinheit für eine Verteilereinheit (46) für Elektroinstallation,
wobei die Verteilereinheit (46) umfasst:
- wenigstens eine horizontale Verteilerkammschiene (40, 41) mit wenigstens einer Reihe Stifte (43), die mit einer Teilung angeordnet sind, die einem vorbestimmten, als Modul bezeichneten Abstand entspricht; und
- eine Vielzahl von Schaltgeräten (51-56) in Modulbauweise, d.h. mit allgemein parallelepipedischer Form mit zwei Hauptstirnseiten (11, 12) und zwischen den Hauptstirnseiten (11, 12) verlaufenden Seitenflächen (13-16), mit einer Breite, d.h. einem Abstand zwischen den beiden Hauptstirnseiten (11, 12), die einer ganzen Zahl des Moduls bzw. der Module entspricht, und wobei eine der oberen oder unteren nachstehend als Anschlussseitenfläche bezeichneten Seitenflächen (16) eine Öffnung (22A, 22B, 23A, 23B, 62A, 62B, 63A, 63B, 80A, 80B) aufweist, die Zugang zu einer Klemme gewährt, die zur Aufnahme eines Stifts (43) der somit in einer Links-Rechts-Richtung angeordneten Kammschiene (40, 41) ausgebildet ist;
wobei die Abschlusseinheit ein Schaltgerät (151) in Modulbauweise umfasst, nachstehend bezeichnet als Abschlussschaltgerät, wobei in der Anschlussseitenfläche (116):
- zwei Ausgangsöffnungen (162A, 162B, 163A, 163B) jeweils Zugang zu einer Stromabgangsklemme gewähren, die mit einem Stift (43) einer Kammschiene (40, 41) verbindbar ist, wobei jede entsprechende Stromabgangsklemme für einen entsprechenden Pol vorgesehen ist; und
- zwei Eingangsöffnungen (160, 161) jeweils Zugang zu einer Stromeingangsklemme gewähren, die mit einem entsprechenden Stromzufuhrkabel (36, 37) verbindbar ist, wobei jede Stromeingangsklemme für einen entsprechenden Pol vorgesehen ist, wobei jede Eingangsklemme eine Schraubklemme ist, mit einer Schraubenzugangsöffnung in der Vorderseite (115) des Abschlussgeräts (151) für jede Schraubklemme, derart, dass die beiden Eingangsöffnungen (160, 161) bezüglich einander in einer Links-Rechts-Richtung versetzt sind, wobei die beiden Stromeingangsöffnungen (160, 161) die einzigen Öffnungen der Anschlussseite sind, die Zugang zu einer Stromeingangsklemme gewähren;
wobei das Abschlussgerät eine Breite von zwei Modulen hat, wobei die beiden in einem Abschnitt des Abschlussschaltgeräts (151) angeordneten Eingangsöffnungen (160, 161) ausgehend von einer ersten Hauptstirnseite (111) eine Breite von einem Modul haben;
**dadurch gekennzeichnet, dass**:
- das Abschlussgerät (151) zur Abnahme eines vorbestimmten Stroms zwischen den Eingangs- und den Abgangsklemmen ausgebildet ist, der gemäß Norm CEI 61008 ein elektrisches Kabel (36, 37) mit einer Drahtader (31) mit einem Querschnitt von bis zu 25 mm² erfordert, wobei die Drahtader (31) gemäß Norm CEI 60947 in einer Schraubklemme aufzunehmen ist, die eine Drahtader (31) mit einem Durchmesser von bis zu 6,9 mm zulässt;
- die Abschlusseinheit zusätzlich zu dem Abschlussgerät (151) eine Anschlusseinheit (35; 100, 90, 101, 102) mit zwei Stiften (38, 39), die jeweils wie ein Stift (43) einer Kammschiene (40, 41) angeordnet sind, und zwei Schraubklemmen (33, 34; 100) umfasst, die jeweils zur Aufnahme einer Drahtader (31) mit einem Durchmesser von bis zu 6,9 mm ausgebildet sind, wobei jede Schraubklemme (33, 34; 100) der Anschlusseinheit (35; 100, 90, 101, 102) mit einem entsprechenden Stift (38, 39) der Anschlusseinheit elektrisch verbunden ist; und
- jede Eingangsöffnung (160, 161) des Abschlussgeräts (151) so dimensioniert ist, dass das Einführen eines Stifts (38, 39) der Anschlusseinheit möglich ist, und so dimensioniert ist, dass das Einführen einer Drahtader (31) mit einem Durchmesser von 6,9 mm nicht möglich ist.

2. Einheit nach Anspruch 1,
**dadurch gekennzeichnet, dass** jede Eingangsöffnung (160, 161) des Abschlussgeräts (151) so dimensioniert ist, dass das Einführen nur eines einzigen Stifts möglich ist, der als ein Stift (43) einer Kammschiene (40, 41) ausgebildet ist.

3. Einheit nach einem der Ansprüche 1 oder 2,
**dadurch gekennzeichnet, dass** jede Eingangsöffnung (160, 161) des Abschlussgeräts (151) eine Breite zwischen 4,5 mm und 7 mm sowie eine Tiefe zwischen 2,5 mm und 3,5 mm aufweist.

4. Abschlusseinheit nach einem der Ansprüche 1 bis 3,
**dadurch gekennzeichnet, dass** die Eingangsöffnungen (160, 161) bezüglich einander in einer von vorne nach hinten verlaufenden Richtung versetzt sind.

5. Einheit nach einem der Ansprüche 1 bis 4,
**dadurch gekennzeichnet, dass** die Ausgangsöffnungen ein erstes Paar in Links-Rechts-Richtung fluchtend angeordnete Öffnungen (162A, 162B) und ein zweites Paar in Links-Rechts-Richtung fluchtend angeordnete Öffnungen (163A, 163B) umfasst, wobei das erste Öffnungspaar (162A, 162B) und das zweite Öffnungspaar (163A, 163B) hintereinander mit einem geringen Versatz nach hinten angeordnet sind, ohne Versatz in der Links-Rechts-Richtung.

6. Einheit nach einem der Ansprüche 1 bis 5,
**dadurch gekennzeichnet, dass** das Abschlussgerät zur Abnahme eines vorbestimmten Stroms von maximal 63 A zwischen den Eingangsklemmen und den Abgangsklemmen ausgebildet ist.

7. Einheit nach einem der Ansprüche 1 bis 5,
**dadurch gekennzeichnet, dass** das Abschlussgerät ein Fehlerstromschutzschalter (151) ist.

8. Einheit nach einem der Ansprüche 1 bis 7,
**dadurch gekennzeichnet, dass** die Anschlusseinheit eine Ummantelung (84) aus elektrisch isolierendem Material umfasst, in der zwei Schraubklemmen (33, 34) und zwei jeweils als ein Stift (43) einer Kammschiene (40, 41) ausgeführte Stifte (38, 39) nebeneinanderliegend angeordnet sind.

9. Einheit nach Anspruch 8,
**dadurch gekennzeichnet, dass** die Anschlusseinheit eine vertikale Verteilervorrichtung (35) ist, mit wenigstens zwei Untereinheiten, die jeweils von zwei Schraubklemmen (33, 34) und zwei Stiften (38, 39) gebildet sind, die durch die Ummantelung (84) aus elektrisch isolierendem Material nebeneinanderliegend angeordnet sind, und elektrischen Leitern zum Verbinden der beiden in der Ummantelung (84) aus elektrisch isolierendem Material angeordneten Untereinheiten.

10. Einheit nach einem der Ansprüche 1 bis 8,
**dadurch gekennzeichnet, dass** die Anschlusseinheit ein Schaltgerät (100) in Modulbauweise umfasst, das die beiden Schraubklemmen, die jeweils zur Aufnahme der Drahtader eines entsprechenden Stromzufuhrkabels (36, 37) ausgebildet sind, und zwei horizontale Verteilerkammschienen (101, 102) zum Verbinden der Eingangsklemmen des Abschlussschaltgeräts (151) mit dem Schaltgerät (100) umfasst, welches die Schraubklemmen zur Aufnahme der Drahtader (31) eines entsprechenden Stromzufuhrkabels (36, 37) umfasst.

## Claims

1. End assembly for a distribution assembly (46) for an electrical installation, which distribution assembly (46) comprises:
- at least one horizontal-distribution comb (40, 41) comprising at least one row of teeth (43) which are arranged at a pitch which is equal to a predetermined distance, referred to as a module distance; and
- a plurality of electrical apparatuses (51-56) in a modular format, that is to say in a generally parallelepiped shape having two main faces (11, 12) and lateral faces (13-16) extending from one of the main faces (11, 12) to the other, having a width, that is to say the distance between the two main faces (11, 12), which is equal to an integer of said module(s), and one of said, upper or lower, lateral faces (16), referred to hereinafter as a lateral connecting face, having an opening (22A, 22B, 23A, 23B, 62A, 62B, 63A, 63B, 80A, 80B) which gives access to a terminal configured to receive a tooth (43) of said comb (40, 41) then arranged in a left-to-right direction;
which end assembly comprises one said electrical apparatus in a modular format (151), referred to hereinafter as an electrical end assembly, comprising, in said lateral connecting face (116):
- two outlet openings (162A, 162B, 163A, 163B) which each give access to a current-outlet terminal to be connected to a tooth (43) of a said comb (40, 41), each said respective current-outlet terminal being provided for a respective electrical pole; and
- two inlet openings (160, 161) which each give access to a current-inlet terminal to be connected to a respective electrical current-inlet cable (36, 37), each said current-inlet terminal being provided for a respective electrical pole, each inlet terminal being a screw terminal, with for each screw terminal, an opening for accessing the screw in the front face (115) of the end apparatus (151), such that said two inlet openings (160, 161) are offset from each other in the left-to-right direction, said two current-inlet openings (160, 161) being the only openings in the connecting face giving access to a current-inlet terminal,
which end apparatus has a width of 2 modules, with said two inlet openings (160, 161) which are arranged in a portion of said electrical end apparatus (151) having, from a first main face (111), a width of 1 module;
**characterized in that**:
- said end apparatus (151) is configured to accept, between the inlet terminals and the outlet terminals, a predetermined current which requires, in accordance with the standard CEI 61008, an electrical cable (36, 37) having a conductive core (31) which has a cross section of up to 25 mm², which conductive core (31) has to be received, in accordance with the standard CEI 60947, in a screw terminal accepting a said conductive core (31) having a diameter of up to 6.9 mm;
- in addition to said end apparatus (151), said end assembly comprises a connecting assembly (35; 100, 90, 101, 102) comprising two teeth (38, 39), each arranged like a tooth (43) of a said comb (40, 41), and two screw terminals (33, 34; 100) each configured to receive a said conductive core (31) having a diameter of up to 6.9 mm, each screw terminal (33, 34; 100) of the connecting assembly (35; 100, 90, 101, 102) being electrically connected to a respective tooth (38, 39) of the connecting assembly; and
- each inlet opening (160, 161) of the end apparatus (151) is dimensioned to allow a said tooth (38, 39) of the connecting assembly to be inserted and is dimensioned to prevent a said conductive core (31) having a diameter of 6.9 mm from being inserted.

2. Assembly according to claim 1, **characterized in that** each inlet opening (160, 161) of the end apparatus (151) is dimensioned to allow a single tooth, which is arranged like a tooth (43) of a said comb (40, 41), to be inserted.

3. Assembly according to either claim 1 or claim 2, **characterized in that** each inlet opening (160, 161) of the end apparatus (151) has a width of between 4.5 mm and 7 mm and a depth of between 2.5 mm and 3.5 mm.

4. End assembly according to any of claims 1 to 3, **characterized in that** said inlet openings (160, 161) are offset from one another in the front-to-back direction.

5. Assembly according to any of claims 1 to 4, **characterized in that** said outlet openings comprise a first pair of openings (162A, 162B) which are aligned in the left-to-right direction and a second pair of openings (163A, 163B) which are aligned in the left-to-right direction, the first pair of openings (162A, 162B) and the second pair of openings (163A, 163B)being arranged one behind the other, merely being offset towards the rear, without any offset in the left-to-right direction.

6. Assembly according to any of claims 1 to 5, **characterized in that** said end apparatus is configured to accept, between the inlet terminals and the outlet terminals, a predetermined maximum current of 63 A.

7. Assembly according to any of claims 1 to 5, **characterized in that** said end apparatus is a differential switch (151).

8. Assembly according to any of claims 1 to 7, **characterized in that** said connecting assembly comprises a casing (84) which is made of electrically insulating material and juxtaposes two said screw terminals (33, 34) and two said teeth (38, 39), each arranged like a tooth (43) of a said comb (40, 41).

9. Assembly according to claim 8, **characterized in that** said connecting assembly is a vertical-distribution device (35) comprising at least two sub-assemblies each formed by two said screw terminals (33, 34) and two teeth (38, 39) juxtaposed by said casing (84) made of insulating material and electrical conductors for connecting these two sub-assemblies, arranged in said casing (84) made of insulating material.

10. Assembly according to any of claims 1 to 8, **characterized in that** said connecting assembly comprises an electrical apparatus in a modular format (100) which comprises said two screw terminals each configured to receive the conductive core of a respective said inlet cable (36, 37), and two horizontal-distribution combs (101, 102) for connecting said inlet terminals of said electrical end apparatus (151) to said electrical apparatus (100) comprising the screw terminals configured to receive the conductive core (31) of a respective said inlet cable (36, 37).
